# EUROPEAN PATENT SPECIFICATION

(11) **EP 2 192 809 B1**
(45) Date of publication and mention of the grant of the patent: **15.05.2019**
(21) Application number: 09177027.1
(22) Date of filing: 25.11.2009
(51) Int. Cl.: H04W 48/16

(54) **Method and system for scanning frequencies in no-service area field**
Verfahren und System zur Frequenzabtastung in Gebieten mit dienstlosen Bereichen
Procédé et système pour le balayage de fréquences dans un champ de zone sans services

(30) Priority: 26.11.2008 IN CH29622008
(43) Date of publication of application: 02.06.2010
(73) Proprietor: Samsung Electronics Co., Ltd., Suwon-si, Gyeonggi-do, 443-742 (KR)
(72) Inventor: Keshav, Kirti, Suwon-si, Gyeonggi-do (KR); Rao, Prakash, Suwon-si, Gyeonggi-do (KR); Gorantla, Seshagiri R., Suwon-si, Gyeonggi-do (KR)
(74) Representative: Nederlandsch Octrooibureau

(56) References cited:
- EP-A1- 1 641 292
- EP-A1- 1 858 278
- WO-A1-00/78075
- WO-A1-03/092313
- US-A- 5 937 351
- US-A1- 2004 224 689
- US-A1- 2007 268 877

## Description

### FIELD

The present disclosure relates generally to the field of scanning one or more frequencies for establishing a service in an electronic device.

### BACKGROUND

Often, it is time consuming to search for a service for a mobile device in a no-service area .In the existing technique, the mobile device performs a complete full band scan continuously for one or more frequencies each time, when the user enters the no-service area. Moreover, battery consumption is more for performing a full band scan.

In light of the foregoing discussion there is a need for an efficient technique for scanning frequencies in a mobile device for service when an user enters a no-service area.

WO 00/78075 A1 discloses a scanning operation in a mobile terminal that will reduce the time spent scanning.

WO 03/092313 A1 discloses a method for initial synchronization in a mobile telecommunications network to connect a mobile terminal to a base station, where the mobile terminal has a search frequency list, and the search for an available frequency is performed in the order of the search frequency list.

EP 1 641 292 A1 discloses a method and apparatus for efficient network scanning that selects candidate frequencies based upon frequency bands that were noted as being active during a previous network scan.

EP 1 858 278 A1 discloses a scheme for facilitating network selection by a wireless user equipment device, wherein the device manipulates a search sequence order of an acquisition database based on how long the device was in power off condition.

### SUMMARY

Embodiments of the present disclosure described herein provide a method and system for scanning frequencies in an electronic device.

An example of a method for scanning frequencies in an electronic device. The method includes storing one or more frequencies. Further the method includes performing a scan based on the stored frequencies for a predetermined time interval. The method also includes establishing a connection based on the scan.

An example of a system includes an electronic device for scanning frequencies. The system includes an acquisition database for scanning frequencies in an electronic device. Further the system includes a timer module for setting a predetermined time interval for the scanning interval. The system also includes a frequency identification module for identifying one or more frequencies of a normal scan and a limited scan.

### BRIEF DESCRIPTION OF FIGURES

The accompanying figures, similar reference numerals may refer to identical or functionally similar elements. These reference numerals are used in the detailed description to illustrate various embodiments and to explain various aspects and advantages of the present disclosure.
**FIG. 1** is a block diagram of an environment, in accordance with which various embodiments can be implemented;
**FIG. 2** is a block diagram of an electronic device, in accordance with one embodiment; and
**FIG. 3** is a flowchart illustrating a method for scanning frequencies in an electronic device.

Persons skilled in the art will appreciate that elements in the figures are illustrated for simplicity and clarity and may have not been drawn to scale. For example, the dimensions of some of the elements in the figures may be exaggerated relative to other elements to help to improve understanding of various embodiments of the present disclosure.

### DETAILED DESCRIPTION

It should be observed that method steps and system components have been represented by conventional symbols in the figures, showing only specific details that are relevant for an understanding of the present disclosure. Further, details that may be readily apparent to person ordinarily skilled in the art may not have been disclosed. In the present disclosure, relational terms such as first and second, and the like, may be used to distinguish one entity from another entity, without necessarily implying any actual relationship or order between such entities.

Embodiments of the present disclosure described herein provide a method and system for scanning frequencies in an electronic device.

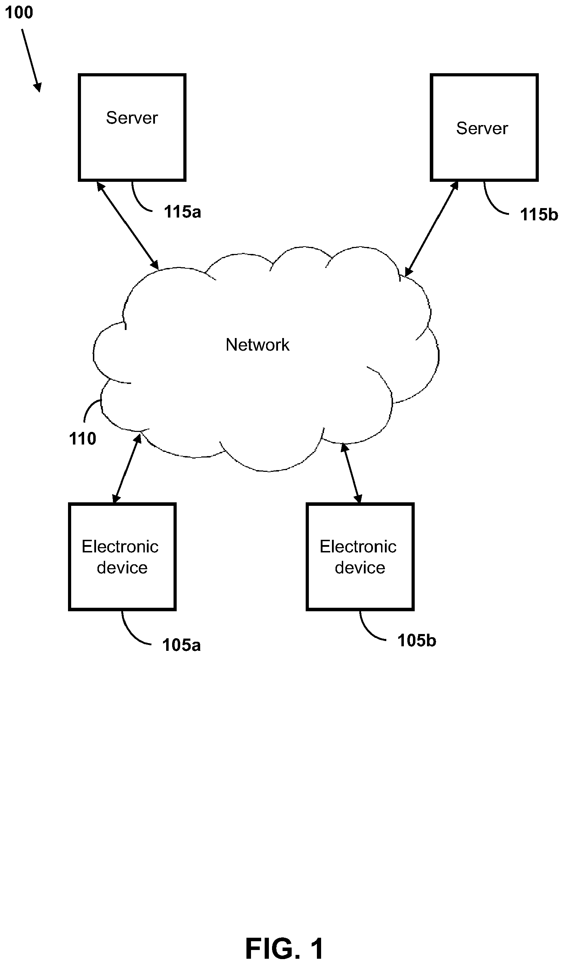

**FIG. 1** is a block diagram of an environment **100,** in accordance with which various embodiments can be implemented. The environment **100** includes one or more electronic devices, for example, an electronic device **105a** and an electronic device **105b** connected to each other through a network **110.**

The electronic device **105a** is connected to one or more servers, for example, a server **115a** and a server **115b** through the network **110.** The electronic device **105a** scans for one or more frequencies to establish a connection with the server **115a** through the network **110.** The one or more frequencies correspond to frequencies at which the electronic device **105a** gets connected to the server **115a.**

Examples of the electronic devices include, but are not limited to, computers, laptops, mobile devices, data processing units, computing devices, hand held devices, and personal digital assistants (PDAs).

Examples of the network **110** include but are not limited to a Local Area Network (LAN), a Wireless Local Area Network (WLAN), a Wide Area Network (WAN), internet and a Small Area Network (SAN).

Examples of the server **115a** include but are not limited to, content server, dynamic host configuration protocol (DHCP) server, mail server, Domain server, File transfer protocol (FTP) server, Domain name system(DNS) server and web server.

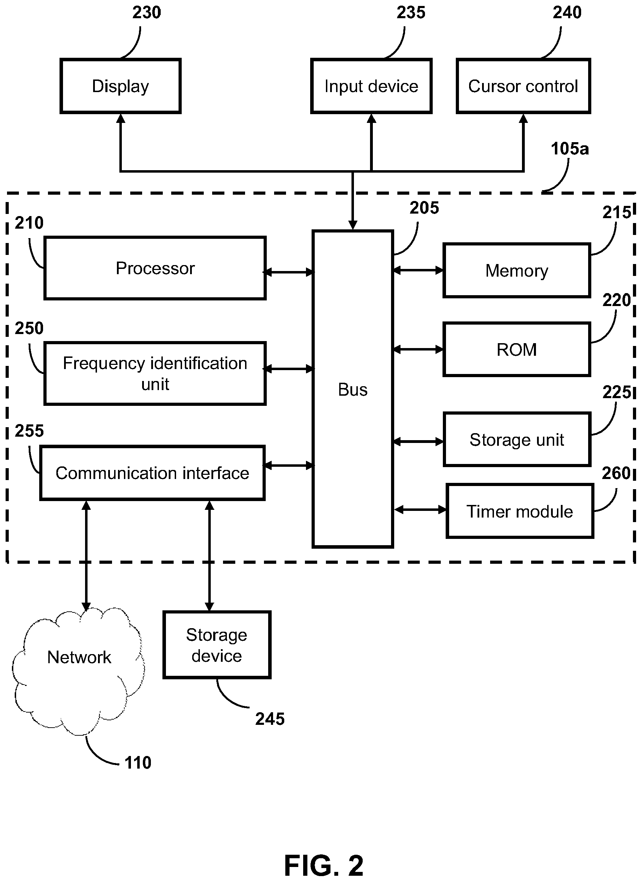

The electronic device **105a** includes various elements and is explained in conjunction with **FIG 2****.**

**FIG. 2** is a block diagram of the electronic device **105a** in accordance with one embodiment. The electronic device **105a** includes a bus **205** or other communication mechanism for communicating information. The electronic device **105a** includes a processor **210** coupled with the bus **205.** Further, the electronic device **105a** includes a memory **215,** such as a random access memory (RAM) or other dynamic storage device, coupled to the bus **205** for storing electronic mails and instructions to be executed by processor **210.** The memory **215** can be used for storing any temporary information required. The electronic device **105a** further includes a read only memory (ROM) **220** or other static storage device coupled to the bus **205** for storing static information and instructions for the processor **210.** A storage unit **225,** such as a magnetic disk or optical disk, is provided and coupled to the bus **205** for storing information.

The electronic device **105a** can be coupled via the bus **205** to a display unit **230,** such as a cathode ray tube (CRT), a liquid crystal display (LCD) or a light emitting diode (LED) display, for displaying information. An input device **235,** including alphanumeric and other keys, is coupled to the bus **205** for communicating information and command selections to the processor **210.** Another type of user input device is a cursor control **240,** such as a mouse, a trackball, or cursor direction keys for communicating direction information and command selections to the processor **210** and for controlling cursor movement on the display unit **230.** The input device **235** can also be included in the display **230,** for example a touch screen.

Various embodiments are related to the use of the electronic device **105a** for implementing the techniques described herein. In one embodiment, the techniques are performed by the processor **210** using information included in the memory **215.** The information can be read into the memory **220** from another machine-readable medium, such as the storage unit **225.**

The term "machine-readable medium" as used herein refers to any medium that participates in providing data that causes a machine to operate in a specific fashion. In an embodiment implemented using the electronic device **105a,** various machine-readable medium are involved, for example, in providing instructions to processor **210** for execution. The machine-readable medium can be a storage media. Storage media includes both non-volatile media and volatile media. Non-volatile media includes, for example, optical or magnetic disks, such as the storage unit **225.** Volatile media includes dynamic memory, such as the memory **215.** All such media must be tangible to enable the instructions carried by the media to be detected by a physical mechanism that reads the instructions into a machine.

Common forms of machine-readable medium include, for example, a floppy disk, a flexible disk, hard disk, magnetic tape, or any other magnetic medium, a CD-ROM, any other optical medium, punchcards, papertape, any other physical medium with patterns of holes, a RAM, a PROM, and EPROM, a FLASH-EPROM, any other memory chip or cartridge.

In another embodiment, the machine-readable medium can be a transmission media including coaxial cables, copper wire and fiber optics, including the wires that comprise the bus **205.** Transmission media can also take the form of acoustic or light waves, such as those generated during radio-wave and infra-red data communications.

Further the electronic device **105a** includes a storage device **245** for storing the one or more frequencies. Further the storage device **245** includes an acquisition database for storing the one or more frequencies scanned previously.

The electronic device **105a** also includes a frequency identification unit **250,** for identifying one or more frequencies of normal scan and limited scan.

The electronic device **105a** also includes a communication interface **260** coupled to the bus **205.** The communication interface **255** provides a two-way data communication coupling to network **110.** For example, the communication interface **255** can be a local area network (LAN) card to provide a data communication connection to a compatible LAN. Wireless links can also be implemented. In any such implementation, the communication interface **255** sends and receives electrical, electromagnetic or optical signals that carry digital data streams representing various types of information. The communication interface **255** can be a universal serial bus port.

Furthermore the electronic device **105a** includes a timer module **260** for setting a predetermined time interval for the scanning. The electronic device **105a** scans for one or more frequencies stored in the acquisition database for a predetermined time interval.

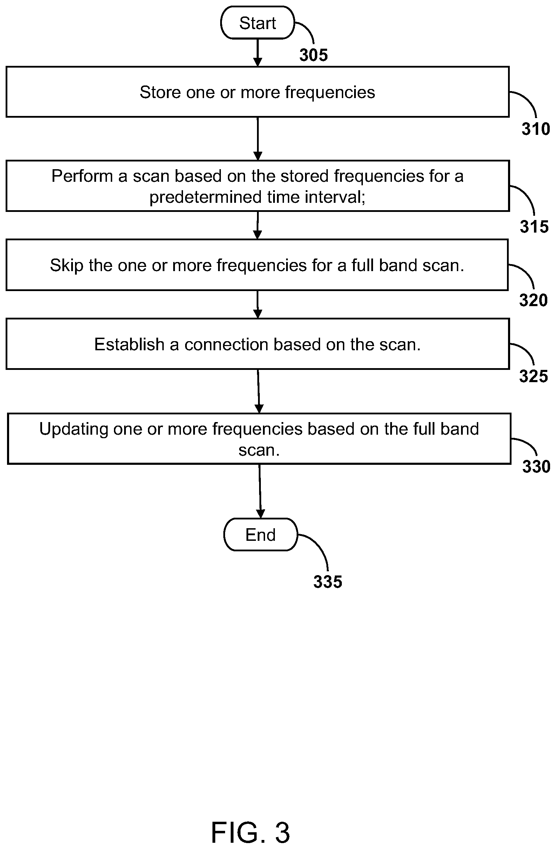

**FIG. 3** is a flowchart illustrating a method for scanning frequencies in no-service area.

The method starts at step **305.**

At step **310,** the one or more frequencies are stored in an acquisition database. The acquisition database includes both normal service frequencies and limited service frequencies scanned previously for establishing a connection with the service provider in both the service area and no-service area.

The normal service frequencies are the frequencies on which the electronic device was able to receive normal service. Further the limited service frequencies are the frequencies on which the electronic device was able to receive limited service. The limited service frequency contains frequencies of forbidden PLMN (FPLMN) on which the electronic device was able to receive limited service.

At step **315,** the scan is performed based on the stored one or more frequencies for a predetermined time interval. The scanning of one or more frequencies is initiated by Non Access Stratum portion of protocol stack in Mobile Station (NAS) when the mobile device is in no-service area. Further, the NAS sends a Radio Resource Control (RRC) service request to the electronic device to perform a scan. Furthermore on receiving the RRC service request by the electronic device the scan is performed for the one or more frequencies.

The electronic device first performs a scan for the stored one or more frequencies in the acquisition database for a predetermined time interval. The electronic device continues with the search for predetermined time interval for each subsequent request received during the time interval.

Further, after the predetermined time interval has expired and if no service is available for the stored frequencies in the acquisition database, a full band scan is performed.

At step **320,** the one or more frequencies are skipped when the full band scan is performed. The one or more frequencies skipped corresponds to frequencies of Forbidden Public land mobile network (FPLMN).

The frequencies namely (FPLMN) frequencies are skipped as the corresponding frequencies were updated previously for a predetermined time interval in the acquisition database and are available for scan at any point of time.

In one embodiment, an emergency call can also be made by the user in no-service area .Further ,the emergency call is established based on the one or more frequencies updated in the acquisition database.

At step **325,** a connection is established based on the scanned one or more frequencies.

At step **330,** the acquisition database is updated with one or more frequencies based on the full band scan.

The method stops at step **335.**

In the preceding specification, the present disclosure and its advantages have been described with reference to specific embodiments. However, it will be apparent to a person of ordinary skill in the art that various modifications and changes can be made, without departing from the scope of the present disclosure, as set forth in the claims below. Accordingly, the specification and figures are to be regarded as illustrative examples of the present disclosure, rather than in restrictive sense. All such possible modifications are intended to be included within the scope of present disclosure.

## Claims

1. A method for scanning frequencies in an electronic device, the method comprising:
storing (310) one or more frequencies in an acquisition database;
performing (315) a scan based on the stored one or more frequencies for a predetermined time interval; and
when no service is available for the stored frequencies and the predetermined time interval is expired, performing (320) a full band scan except the stored one or more frequencies, and
wherein the stored one or more frequencies includes frequencies of forbidden public land mobile network, FPLMN, and
wherein the frequencies of FPLMN are updated previously in the predetermined time interval in the acquisition database.

2. The method of claim 1 further comprising:
establishing (325) a connection based on scanned frequencies.

3. The method of claim 1, wherein the performing comprises:
updating (330) the stored one or more frequencies based on the full band scan.

4. An electronic device for scanning frequencies, the electronic device comprising:
an acquisition database configured to store one or more frequencies;
a timer module (260) configured to set a predetermined time interval for a scan based on the one or more stored frequencies; and
a scanning module configured to perform a scan based on the stored one or more frequencies for the predetermined time interval and to perform a full band scan except the stored one or more frequencies if no service is available for the stored frequencies and the predetermined time interval is expired, and
wherein the stored one or more frequencies includes frequencies of forbidden public land mobile network, FPLMN, and
wherein the frequencies of FPLMN are updated previously in the predetermined time interval in the acquisition database.

5. The electronic device of claim 4, further comprising:
a communication interface (255) configured to establish a connection based on the scanned frequencies.

6. The electronic device of claim 4, further comprising
a processor (210) configured to update the stored one and more frequencies based on the full band scan.

## Patentansprüche

1. Verfahren zur Frequenzabtastung in einer elektronischen Vorrichtung, wobei das Verfahren Folgendes umfasst:
Speicherung (310) einer oder mehrerer Frequenzen in einer Beschaffungsdatenbank;
Durchführung (315) einer Abtastung, die auf der/den gespeicherten Frequenz(en) basiert, ein vorherbestimmtes Zeitintervall lang; und
wenn kein Dienst für die gespeicherten Frequenzen verfügbar ist und das vorherbestimmte Zeitintervall abgelaufen ist, Durchführung (320) einer Vollbandabtastung, ausgenommen die gespeicherte(n) Frequenz(en), und
wobei die gespeicherte(n) Frequenz(en) Frequenzen von verbotenen öffentlichen landgestützten Mobilfunknetzen, FPLMN, umfassen, und
wobei die Frequenzen des FPLMN vorher in dem vorherbestimmten Zeitintervall in der Beschaffungsdatenbank aktualisiert werden.

2. Verfahren nach Anspruch 1, das des Weiteren Folgendes umfasst:
Erstellen (325) einer Verbindung, die auf abgetasteten Frequenzen basiert.

3. Verfahren nach Anspruch 1, wobei die Durchführung Folgendes umfasst:
Aktualisierung (330) der gespeicherte(n) Frequenz(en) basierend auf der Vollbandabtastung.

4. Elektronische Vorrichtung zur Frequenzabtastung, wobei die elektronische Vorrichtung Folgendes umfasst:
eine Beschaffungsdatenbank, konfiguriert, um eine oder mehrere Frequenzen zu speichern;
ein Zeitschaltermodul (260), konfiguriert, um ein vorherbestimmtes Zeitintervall für eine Abtastung einzustellen, basierend auf der/den gespeicherte(n) Frequenz(en); und
ein Abtastmodul, konfiguriert, um eine Abtastung durchzuführen, basierend auf der/den gespeicherte(n) Frequenz(en), für das vorherbestimmte Zeitintervall, und um eine Vollbandabtastung durchzuführen, ausgenommen die gespeicherte(n) Frequenz(en), wenn kein Dienst für die gespeicherten Frequenzen verfügbar ist und das vorherbestimmte Zeitintervall abgelaufen ist, und
wobei die gespeicherte(n) Frequenz(en) Frequenzen von verbotenen öffentlichen landgestützten Mobilfunknetzen, FPLMN, umfasst, und
wobei die Frequenzen von FPLMN vorher in dem vorherbestimmten Zeitintervall in der Beschaffungsdatenbank aktualisiert werden.

5. Elektronische Vorrichtung nach Anspruch 4, die des Weiteren Folgendes umfasst:
eine Verbindungsschnittstelle (255), konfiguriert, um eine Verbindung zu erstellen, basierend auf den abgetasteten Frequenzen.

6. Elektronische Vorrichtung nach Anspruch 4, die des Weiteren einen Prozessor (210) umfasst, konfiguriert, um die gespeicherte(n) Frequenz(en) zu aktualisieren, basierend auf der Vollbandabtastung.

## Revendications

1. Procédé de balayage de fréquences dans un dispositif électronique, le procédé comprenant :
stocker (310) une ou plusieurs fréquences dans une base de données d'acquisition ;
réaliser (315) un balayage basé sur la ou les fréquences stockées pendant un intervalle de temps prédéterminé ; et
lorsqu'aucun service n'est disponible pour les fréquences stockées et que l'intervalle de temps prédéterminé est expiré, réaliser (320) un balayage de bande complète à l'exception de la ou des fréquences stockées, et
où la ou les fréquences stockées comprennent des fréquences de réseau mobile terrestre public interdit, FPLMN, et
où les fréquences de FPLMN sont mises à jour précédemment dans l'intervalle de temps prédéterminé dans la base de données d'acquisition.

2. Procédé selon la revendication 1, comprenant en outre :
établir (325) une connexion basée sur des fréquences balayées.

3. Procédé selon la revendication 1, où la réalisation comprend :
mettre à jour (330) la ou les fréquences stockées sur la base du balayage de bande complète.

4. Dispositif électronique de balayage de fréquences, le dispositif électronique comprenant :
une base de données d'acquisition configurée pour stocker une ou plusieurs fréquences ;
un module de minuterie (260) configuré pour définir un intervalle de temps prédéterminé pour un balayage sur la base de la ou les fréquences stockées ; et
un module de balayage configuré pour réaliser un balayage sur la base de la ou les fréquences stockées pendant l'intervalle de temps prédéterminé et pour réaliser un balayage de bande complète à l'exception de la ou les fréquences stockées si aucun service n'est disponible pour les fréquences stockées et que l'intervalle de temps prédéterminé est expiré, et
où la ou les fréquences stockées comprennent des fréquences de réseau mobile terrestre public interdit, FPLMN, et
où les fréquences de FPLMN sont mises à jour précédemment dans l'intervalle de temps prédéterminé dans la base de données d'acquisition.

5. Dispositif électronique selon la revendication 4, comprenant en outre :
une interface de communication (255) configurée pour établir une connexion en fonction des fréquences balayées.

6. Dispositif électronique selon la revendication 4, comprenant en outre un processeur (210) configuré pour mettre à jour la ou les fréquences stockées sur la base du balayage de bande complète.
